# EUROPÄISCHE PATENTSCHRIFT

(11) **EP 2 311 691 B1**
(45) Veröffentlichungstag und Bekanntmachung des Hinweises auf die Patenterteilung: **11.12.2013**
(21) Anmeldenummer: 10186822.2
(22) Anmeldetag: 07.10.2010
(51) Int. Cl.: B60R 21/0132

(54) **Verfahren und Steuergerät zur Klassifizierung eines Kollisionsverlaufs eines Fahrzeugs**
Method and control device for classifying a collision profile of a vehicle
Procédé et appareil de commande pour la classification d'un déroulement de collision d'un véhicule

(30) Priorität: 16.10.2009 DE 102009045757
(43) Veröffentlichungstag der Anmeldung: 20.04.2011
(73) Patentinhaber: Robert Bosch GmbH, 70442 Stuttgart (DE)
(72) Erfinder: Lang, Gunther, 70563 Stuttgart (DE)

(56) Entgegenhaltungen:
- EP-A1- 1 747 945
- DE-A1- 10 040 111
- DE-A1-102006 001 366
- DE-A1-102006 038 844
- US-A- 5 164 901

## Beschreibung

### Stand der Technik

Die vorliegende Erfindung bezieht sich auf ein Verfahren zur Klassifizierung eines Kollisionsverlaufs eines Fahrzeugs, auf ein entsprechendes Steuergerät sowie auf ein entsprechendes Computerprogrammprodukt.

In den in Airbag-Steuergeräten eingesetzten Rückhaltealgorithmen spielen Kennlinien eine wichtige Rolle, in denen Sensorsignale und daraus abgeleitete Merkmale gegeneinander aufgetragen werden.

In gegenwärtigen Steuergeräten werden in einem sogenannten Kernalgorithmus, der allein auf einem in x-Richtung messenden Zentralsensor beruht, Kennlinien verwendet, bei denen ein Beschleunigungssignal gegenüber dem einfach oder zweifach integrierten Beschleunigungssignal (dv bzw. ds) aufgetragen wird. Grundlegende Eigenschaft all der eingesetzten Kennlinien ist, dass immer Merkmale zur gleichen Zeit miteinander korreliert werden. Das bedeutet, dass in einem gewissen Punkt auf einer Kollisionstrajektorie in diesen 2- oder mehrdimensionalen Merkmalsräumen die Werte der verwendeten Merkmale zum gleichen Zeitpunkt miteinander in Bezug gesetzt werden. Aufgrund von Änderungen in den Fahrzeugstrukturen, können Kollisionen mit dieser bekannten Vorgehensweise nicht mehr mit der erforderlichen Sicherheit klassifiziert werden, so dass die eingesetzten Rückhaltemittel nicht mehr optimal angesteuert werden können.

Die US 5 164 901 A befasst sich mit einem Verfahren zur Auslösung eines Insassenrückhaltesystems eines Fahrzeugs. Das Verfahren basiert auf einer Korrelation zweier in den Frequenzbereich transformierter Signale.

Die DE 10 2006 038 844 A1 beschreibt ein Verfahren zur Ansteuerung von Personenschutzmitteln, bei dem in Abhängigkeit von einem ersten Signal einer Beschleunigungssensorik und einem zweiten Signal einer Körperschallsensorik die Personenschutzmittel angesteuert werden. Die Ansteuerung wird in Abhängigkeit von einer Lage eines Vektors aus mindestens zwei Merkmalen aus dem ersten Signal in Bezug auf eine Kennlinie entschieden, wobei die Kennlinie in Abhängigkeit vom zweiten Signal verändert wird.

### Offenbarung der Erfindung

Vor diesem Hintergrund wird mit der vorliegenden Erfindung ein Verfahren zur Klassifizierung eines Kollisionsverlaufs eines Fahrzeugs, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass die Merkmale, mit denen der zur Diskriminierung der Kollision verwendete Merkmalsraum aufgespannt wird, zeitlich zueinander versetzt werden können. Dieses zeitliche Versetzen (Desynchronisation) erlaubt es, Informationen zu verschiedenen Zeitpunkten während der Kollision miteinander in Verbindung zu setzen und damit charakteristische Kollisionsverläufe besser zu identifizieren. Das bedeutet, dass in einem gewissen Punkt auf einer Kollisionstrajektorie in diesen 2- oder mehrdimensionalen Merkmalsräumen die Werte der verwendeten Merkmale zu unterschiedlichen Zeitpunkten miteinander in Bezug gesetzt werden.

Die Fahrzeugstrukturen haben sich in den letzten Jahren aufgrund von verschiedenen neuen Anforderungen, z.B. dem 10°-AZT Versicherungscrash, Fußgängerschutzmaßnahmen oder dem Trend zur Leichtbauweise mit hochfesten Stählen, sehr zu Ungunsten der Airbag-Auslösesensorik entwickelt. Dies führt unter Anderem zu zwei wichtigen Konsequenzen. Erstens zeigen 0°-Kollisionen mit unterschiedlicher Geschwindigkeit häufig kaum noch Unterschiede in der Höhe der Beschleunigungspeaks. Bei schnelleren Kollisionen fällt der Peak aber schmaler aus. Zweitens weisen Nichtauslösekollisionen (engl. NoFire-Crashes), wie eine 15km/h 0°-Kollision oder der AZT Crash, wesentlich höhere Beschleunigungspeaks auf, als noch vor wenigen Jahren. Dies hat zur Folge, dass die Trennungsperformance der Auslösealgorithmen, beispielsweise der allein auf einem in x-Richtung messenden Zentralsensor basierende Kernalgorithmen, nicht mehr ausreichend ist.

Für die Trennungsperformance der Algorithmen spielen daher auf der "Stärke" der Beschleunigung basierende Merkmale eine immer geringere Rolle. Stattdessen werden für eine verbesserte Performance vermehrt die charakteristischen Kollisionsverläufe der einzelnen Kollisionen bewertet. Erfindungsgemäß werden entsprechende Merkmale, die die Kollisionsverläufe charakterisieren, zu verschiedenen Zeiten miteinander in Bezug gesetzt.

Durch den erfindungsgemäßen Ansatz ergibt sich ein verbessertes Diskriminierungspotenzial für Airbag-Auslösealgorithmen. Die Trennbarkeit von Nichtauslösekollisionen zu Auslösekollisionen (engl. MustFire Crashes) wird deutlich verbessert. Unter anderem ergibt sich auch eine deutliche Verbesserung Im Hinblick auf die FMVSS208 Gesetzgebung in den USA, die meist eine einstufige Airbagauslösung bei der 26 km/h 0°-Kollision und eine zweistufige Auslösung bei der 32 km/h 0°-Kollision erfordert. Dies ist bislang meist nicht über den Kernalgorithmus möglich und erfordert die Auswertung von Sondermerkmalen und auch der Fahrzeugeigengeschwindigkeit. Mit dem erfindungsgemäßen Konzept der desynchronisierten Kennlinie ist diese Trennbarkeit über einen Kernalgorithmus allein möglich.

Die vorliegende Erfindung schafft ein Verfahren zur Klassifizierung eines Kollisionsverlaufs eines Fahrzeugs, das die folgenden Schritte umfasst: Bestimmen einer ersten Merkmalskennlinie, die einen zeitlichen Verlauf eines ersten Merkmals über den Kollisionsverlauf repräsentiert; Bestimmen einer zweiten Merkmalskennlinie, die einen um eine vorbestimmte Zeitdauer verschobenen zeitlichen Verlauf eines zweiten Merkmals über den Kollisionsverlauf repräsentiert, wobei das erste und das zweite Merkmal auf einem oder mehreren Sensorsignalen basieren; Bestimmen eines Korrelationsverlaufs aus der ersten und der zweiten Merkmalskennlinie, indem der zeitliche Verlauf des ersten Merkmals und der verschobene zeitliche Verlauf des zweiten Merkmals in Bezug zueinander gesetzt werden; und Vergleichen des Korrelationsverlaufs mit einer Trennungskennlinie, um die Kollision zu klassifizieren.

Der Kollisionsverlauf kann eine Kollision des Fahrzeugs mit einem weiteren Fahrzeug oder mit einem Objekt beschreiben. Mittels der Klassifizierung ist eine Einteilung des Kollisionsverlaufs in vorbestimmte Kollisionsklassen möglich. So kann mittels der Klassifizierung bestimmt werden, ob es sich bei der Kollision um eine Auslösekollision, bei der Rückhaltemittel ausgelöst werden sollen, oder um eine Nichtauslösekollision, bei der keine Rückhaltemittel ausgelöst werden, handelt. Ferner kann die Klassifizierung genutzt werden, um im Fall der Auslösekollision zu entscheiden, welche Rückhaltemittel zu welcher Zeit und auf welche Weise angesteuert werden sollen. Eine Information über das erste und das zweite Merkmal kann über eine Schnittstelle, beispielsweise von einem Sensor empfangen werden. Auch kann es sich zumindest bei einem der Merkmale um eine Größe handeln, die beispielsweise durch Ableitung oder Integration eines Sensorsignals ermittelt wird. Bei den Merkmalen kann es sich um eine Bewegungsinformation des Fahrzeugs handeln. Beispielsweise kann es sich bei einem der Merkmale um eine Beschleunigung handeln, die von einem oder mehreren Beschleunigungssensoren erfasst werden. Die Merkmale können sich über die Zeit, d.h. insbesondere über einen Zeitabschnitt des Kollisionsverlaufs, verändern. In der ersten Merkmalskennlinie werden zeitlich aufeinanderfolgende Werte des ersten Merkmals über die Zeit aufgetragen. Entsprechend dazu werden in der zweiten Merkmalskennlinie zeitlich aufeinanderfolgende Werte des zweiten Merkmals über die Zeit aufgetragen, wobei eine Zeitskala der zweiten Merkmalskennlinie in Bezug auf eine Zeitskala der ersten Kennlinie um die vorbestimmte Zeitdauer verschoben ist. Insbesondere können die zweiten Merkmale in der zweiten Kennlinie zeitlich verzögert dargestellt sein. Dies kann auch dadurch realisiert werden, dass einer Kennlinie, die einen zeitlich nicht verschobenen Verlauf des zweiten Merkmals repräsentiert, ein entsprechender Verschiebevektor zugewiesen wird, mittels dem eine zeitliche Verschiebung der entsprechenden Merkmalswerte realisiert werden kann. Somit kann erfindungsgemäß ein erstes Merkmal zu einem ersten Zeitpunkt in Bezug gesetzt werden zu einem zweiten Merkmal zu einem zweiten Zeitpunkt, wobei der erste Zeitpunkt und der zweite Zeitpunkt in einer gemeinsamen Zeitskale um die vorbestimmte Zeitdauer auseinanderliegen. Der Korrelationsverlauf kann einen entsprechenden Bezug für die zeitlich aufeinanderfolgenden Werte der Merkmale darstellen. Die Trennungskennlinie trennt unterschiedliche Wertebereiche voneinander. So können ein erster Wertebereich beispielsweise eine Nichtauslösekollision und ein zweiter Wertebereich eine Auslösekollision repräsentieren. Die Trennungskennlinie kann eine gespeicherte Abfolge von Trennwerten umfassen. Durch einen Vergleich einzelner, mehrerer oder aller Werte des Korrelationsverlaufs mit den Trennwerten kann auf einfache Weise entschieden werden, in welchem Wertebereich sich entsprechende Werte des Korrelationsverlaufs befinden. Beispielsweise kann ein Extremwert, beispielsweise ein Maximum, im Korrelationsverlauf ermittelt und dessen Lage in Bezug auf die Trennungskennlinie bestimmt werden. Basierend auf einer Zuordnung der Werte des Korrelationsverlaufs zu entsprechenden Wertebereichen, die durch die Trennungskennlinie voneinander separiert sind, kann die Klassifizierung der Kollision durchgeführt werden. Die Klassifizierung kann als Grundlage zur Ansteuerung der Insassenschutzmittel dienen.

Erfindungsgemäß kann die vorbestimmte Zeitdauer eine Mehrzahl von Millisekunden umfassen. Beispielsweise kann die Zeitdauer einen Wert zwischen 2ms und 6ms aufweisen. Die vorbestimmte Zeitdauer kann fest vorgeben sein oder beispielsweise abhängig von den anzusteuernden Insassenschutzmitteln eingestellt werden. Die Zeitverzögerung kann durch ein Verzögerungselement oder durch eine Verschiebung gespeicherter Werte, beispielsweise mittels eines Verschiebevektors, erfolgen.

Gemäß einer Ausführungsform kann es sich bei dem ersten Merkmal und dem zweiten Merkmal um miteinander korrelierte Größen handeln. Demnach kann beispielsweise der zeitliche Verlauf des ersten Merkmals durch Integration des zeitlichen Verlaufs des zweiten Merkmals bestimmt werden. Insbesondere kann das erste oder das zweite Merkmal eine Beschleunigung des Fahrzeugs repräsentieren und das jeweils andere Merkmal kann eine erste oder zweite Integration der Beschleunigung repräsentieren. Somit kann auf bereits bekannte Diskriminierungsverfahren, die beispielsweise eine Beschleunigungsinformation mit einer daraus bestimmten Geschwindigkeitsinformation oder Weginformation in Bezug setzen, zurückgegriffen werden.

Die Trennungskennlinie kann ausgebildet sein, um zwischen einer Auslösung eines Personenschutzmittels und einer Nichtauslösung des Personenschutzmittels zu unterscheiden. Es können auch mehrere Trennungskennlinien eingesetzt werden. Insbesondere kann durch die Trennungskennlinie zwischen den Ereignissen Auslösen (engl. Fire) und Nichtauslösen (engl. NoFire) bei einer Kollision und den Ereignissen Kollision und Nichtauslöseereignis (engl. Misuses) unterschieden werden.

Dabei kann das erfindungsgemäße Verfahren einen Schritt des Bestimmens der Trennungskennlinie, basierend auf einem lernbasierten Algorithmus, aufweisen. Dies ermöglicht eine automatische Generierung der Trennungskennlinie.

Gemäß einer Ausführungsform kann das Verfahren einen Schritt des Bestimmens eines weiteren Korrelationsverlaufs umfassen. In dem weiteren Korrelationsverlauf kann der zeitliche Verlauf des ersten Merkmals und ein zeitlich nicht verschobener Verlauf des zweiten Merkmals in Bezug zueinander gesetzt werden. Durch einen Schritt des Vergleichens des weiteren Korrelationsverlaufs mit einer weiteren Trennungskennlinie kann die Kollision zusätzlich klassifiziert werden. Die zusätzliche Klassifizierung kann somit auf nicht verzögerten Merkmalsverläufen basieren. Damit bietet sich die zusätzliche Klassifizierung an, um eine Entscheidung zur Auslösung solcher Insassenschutzmittel zu treffen, die sehr schnell nach Kollisionsbeginn ausgelöst werden sollen. Die auf der Verzögerung basierende Klassifizierung kann anschließend zur Verfeinerung der zusätzlichen Klassifizierung oder unabhängig davon zur Ansteuerung von Insassenschutzmitteln eingesetzt werden, die erst zu einem späteren Zeitpunkt im Kollisionsverlauf ausgelöst werden. Auch ist die zusätzliche Klassifizierung bei Kollisionen mit hohen Geschwindigkeiten von Vorteil, bei denen die vorbestimmte Zeitdauer nicht abgewartet werden kann.

Die vorliegende Erfindung schafft ferner ein Steuergerät nach Anspruch 9.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:
- Fig. 1: ein Ablaufdiagramm eines Ausführungsbeispiels der vorliegenden Erfin- dung;
- Fig. 2: eine schematische Darstellung eines Algorithmus gemäß einem Ausfüh- rungsbeispiel der vorliegenden Erfindung;
- Fig. 3a und 3b: schematische Darstellungen von Bereichen im Beschleunigungs- verlauf;
- Fig. 4a und 4b: eine Gegenüberstellung einer synchronen und einer desynchro- nisierten Darstellung;
- Fig. 5a bis 5c: Korrelationsverläufe mit unterschiedlich fallender Flanke;
- Fig. 6a und 6b: Darstellungen von Korrelationsverläufen von 0°-Kollisionen;
- Fig. 7a und 7b: Darstellungen von Korrelationsverläufen Kollisionen mit teilweiser Überlappung; und
- Fig. 8: ein Blockdiagramm eines Steuergeräts gemäß einem Ausführungsbei- spiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

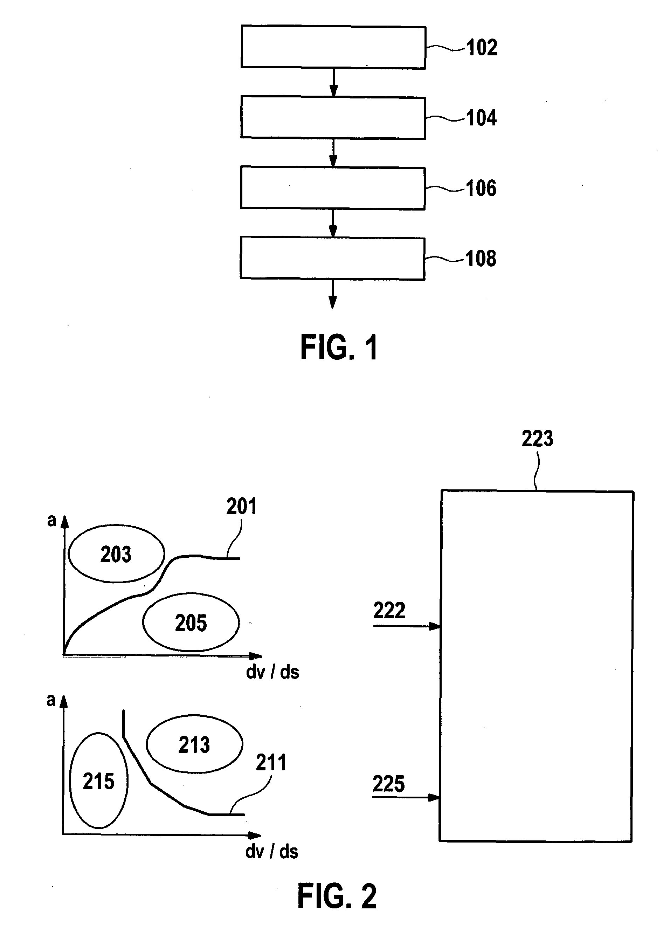

Fig. 1 zeigt ein Ablaufdiagramm eines Verfahrens zur Klassifizierung eines Kollisionsverlaufs eines Fahrzeugs, gemäß einem Ausführungsbeispiel der vorliegenden Erfindung. In einem Schritt 102 erfolgt ein Bestimmen einer ersten Merkmalskennlinie, die einen zeitlichen Verlauf eines ersten Merkmals über den Kollisionsverlauf repräsentiert und in einem Schritt 104 erfolgt ein Bestimmen einer zweiten Merkmalskennlinie, die einen um eine vorbestimmte Zeitdauer verschobenen zeitlichen Verlauf eines zweiten Merkmals über den Kollisionsverlauf repräsentiert. Die Schritte 102, 104 können nacheinander oder parallel ausgeführt werden. Auch kann im Schritt 104 zunächst eine zweite Merkmalskennlinie bestimmt werden, die einen zeitlich nicht verschobenen Verlauf des zweiten Merkmals über den Kollisionsverlauf repräsentiert. In einem Schritt 106 werden der zeitliche Verlauf des ersten Merkmals und der verschobene zeitliche Verlauf des zweiten Merkmals in Bezug zueinander gesetzt. Das bedeutet, dass jeweils ein Wert der ersten Merkmalskennlinie zu einem Zeitpunkt einer ersten Zeitskala mit einem Wert der zweiten Merkmalskennlinie zu einem entsprechenden Zeitpunkt einer zweiten Zeitskala in Bezug gesetzt wird. Wurde im Schritt 104 zunächst eine zeitlich nicht verschobene zweite Merkmalskennlinie bestimmt, so kann ein Wert der ersten Merkmalskennlinie zu einem Zeitpunkt der ersten Zeitskala mit einem Wert der zeitlich nicht verschobenen zweiten Merkmalskennlinie zu einem entsprechend verschobenen Zeitpunkt der ersten Zeitskala in Bezug gesetzt werden. Auf diese Weise kann ein Korrelationsverlauf aus der ersten und der zweiten Merkmalskennlinie bestimmt werden. In einem Schritt 108 wird der Korrelationsverlauf mit einer Trennungskennlinie verglichen. Basierend auf einem Vergleichsergebnis aus dem Vergleich zwischen Korrelationsverlauf und Trennungskennlinie wird die Kollision klassifiziert.

Bei den Merkmalskennlinien kann es sich um Kennlinien handeln, die bereits in bekannten Steuergeräten eingesetzt werden, wobei erfindungsgemäß zumindest eine der Merkmalskennlinie zeitlich verschoben wird.

In gegenwärtigen Steuergeräten werden in einem sogenannten Kernalgorithmus, der allein auf einem in x-Richtung messenden Zentralsensor beruht unterschiedliche Kennlinien verwendet.

Zur Diskriminierung von Auslösekollisionen zu Nichtauslösekollisionen wird das, unter Umständen, gefilterte Beschleunigungssignal gegenüber dem einfach oder zweifach integrierten Beschleunigungssignal (dv bzw. ds) aufgetragen. Der Auslösebereich und der Nichtauslösebereich werden durch eine im Allgemeinen monoton ansteigende Kennlinie voneinander getrennt.

Zur Diskriminierung von Kollisionen und Nichtauslöseereignissen wird ebenfalls das, unter Umständen, gefilterte Beschleunigungssignal gegenüber dem einfach oder zweifach integrierten Beschleunigungssignal (dv bzw. ds) aufgetragen. Der Kollisions- und der Nichtauslöseereignis-Bereich werden durch eine monoton fallende Kennlinie voneinander getrennt.

Fig. 2 zeigt eine Darstellung eines Kernalgorithmus mit Schwellen zur Diskriminierung von Auslösekollisionen und Nichtauslösekollisionen sowie von Kollisionen und Nichtauslöseereignissen.

In den gezeigten Diagrammen ist jeweils eine Beschleunigung a über eine Geschwindigkeit dv oder einen Weg ds aufgetragen.

In dem oberen Diagramm ist eine erste Trennungskennlinie 201 gezeigt, die einen ersten Wertebereich 203 von einem zweiten Wertebereich 205 trennt. Der erste Wertebereich 203 kann eine Kollision (crash) definieren und der zweite Wertebereich 205 kann einen Nichtauslösekollision (nofire) definieren.

In dem unteren Diagramm ist eine zweite Trennungskennlinie 211 gezeigt, die einen dritten Wertebereich 213 von einem vierten Wertebereich 215 trennt. Der dritte Wertebereich 213 kann eine Kollision (crash) definieren und der vierte Wertebereich 215 kann ein Nichtauslöseereignis (misuse) definieren.

Somit kann mittels der ersten Trennungskennlinie 201 eine Trennung zwischen Auslösung (Fire) und Nichtauslösung (Nofire) durchgeführt werden und als erste Eingangsgröße 222 an eine Logische Fusion 223 bereitgestellt werden. Mittels der zweiten Trennungskennlinie 211 kann eine Nichtauslöseereignis-Unterdrückung durchgeführt werden und als zweite Eingangsgröße 225 an die Logische Fusion 223 bereitgestellt werden. In der Logischen Fusion 223 können abhängig von der ersten und der zweiten Eingangsgröße 221, 225 weitere Maßnahmen zur Ansteuerung von Insassenschutzmitteln getroffen werden.

Erfindungsgemäß können entweder die Beschleunigung a oder die Geschwindigkeit dv bzw. der Weg ds zeitlich verschoben aufgetragen sein. In diesem Fall können die Wertebereiche 203, 205, 213, 215 sowie die Trennungskennlinien 201, 211 entsprechend angepasst sein.

In sogenannten Zusatzfunktionen können zusätzliche Merkmale ausgewertet werden. Auch hier können 2- oder neuerdings 3-dimensionale Merkmalsräume betrachtet werden, in denen die zu trennenden Kollisionen mittels einer Kennlinie oder Trennfläche voneinander separiert werden. Die zusätzlichen Merkmale sind beispielsweise Dynamikauswertungen des x-Signals, aus einem in y-Richtung messenden Sensor abgeleitete Merkmale, aus Upfront oder Körperschallsensorik abgeleitete Merkmale, etc. Die x-Richtung kann in Fahrtrichtung und die y-Richtung quer zur Fahrtrichtung ausgerichtet sein.

Das erfindungsgemäße zeitliche Versetzen der zu vergleichenden Merkmale ist insbesondere vorteilhaft, wenn es sich um korrelierte Größen handelt wie z.B. Beschleunigung a und Integral der Beschleunigung dv. Diese Größen sind ja nicht unabhängig, sondern hohe Werte der Beschleunigung führen zu einem starken Anwachsen des Integrals. Im 2-dimensionalen Merkmalsraum a über dv führt das dazu, dass Peaks verglichen mit der Auftragung a über Zeit verbreitert dargestellt werden.

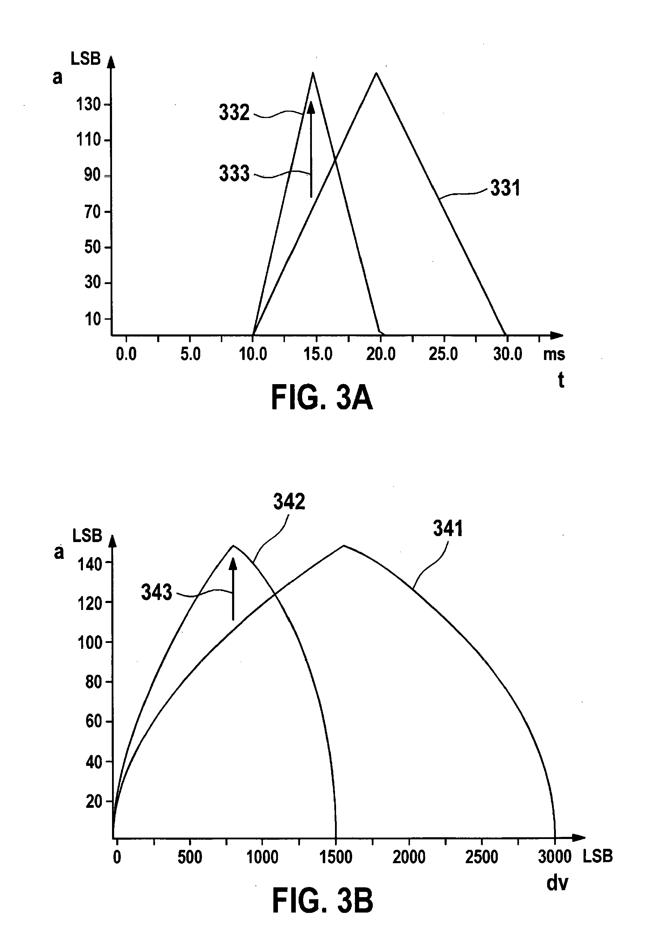

Dies ist in den Figuren 3a und 3b schematisch für eine schnelle und eine langsame Kollision dargestellt. Getreu den neuesten Trends in den Fahrzeugstrukturen wird hier angenommen, dass ein gewisser Bruch in der Knautschzone bei beiden Kollisionsgeschwindigkeiten zur selben Peakhöhe führt, bei der schnelleren Kollision aber zeitlich schneller abläuft. Ein Peak kann in diesem Sinne ein Maxima oder einen Scheitelpunkt bzw. einen Scheitelverlauf einer Kennlinie darstellen.

Fig. 3a zeigt eine schematische Darstellung eines Bereichs im Beschleunigungsverlauf einer langsamen Kollision 331 und einer schnellen Kollision 332 eine einem a-t Diagramm. Somit handelt es sich bei den Kennlinien 331, 332 um Merkmalskennlinien, die einen zeitlichen Verlauf des Merkmals der Beschleunigung a über die Zeit t darstellen. Zu dem Zeitpunkt, in dem die schnellere Kollision 332 ihr Peakmaximum, also den größten Beschleunigungswert, erreicht, ist eine Trennbarkeit 333 um den Faktor 2 gegeben.

Fig. 3b zeigt eine weitere schematische Darstellung eines Bereichs im Beschleunigungsverlauf der langsamen Kollision 341 und der schnellen Kollision 342 in einem a-dv Diagramm. Somit ist jeweils das Merkmal der Beschleunigung a über die Geschwindigkeitsänderung dv aufgetragen. Zu dem Zeitpunkt, in dem die schnellere Kollision 342 ihr Peakmaximum, also den größten Beschleunigungswert, erreicht, ist nur eine Trennbarkeit 343 um den Faktor sqrt(2) gegebenen. Zum Bestimmen der Korrelationsverläufe 341, 342, bei denen jeweils die Beschleunigung a in Bezug zur Geschwindigkeitsänderung dv gesetzt ist, können zunächst weitere Merkmalskennlinien bestimmt werden, die einen zeitlichen Verlauf des Merkmals der Geschwindigkeitsänderung dv über die Zeit t darstellen.

Aus den Figuren 3a und 3b ist ersichtlich, dass die Peaks in der a-dv Darstellung verbreitert dargestellt werden und somit eine schlechtere Trennbarkeit verglichen mit der a-t Auftragung auftritt. Diese Verschlechterung ist eine direkte Folge der Synchronität von a und dv. So fallen Peaks von a immer in Phasen, in denen dv stark anwächst.

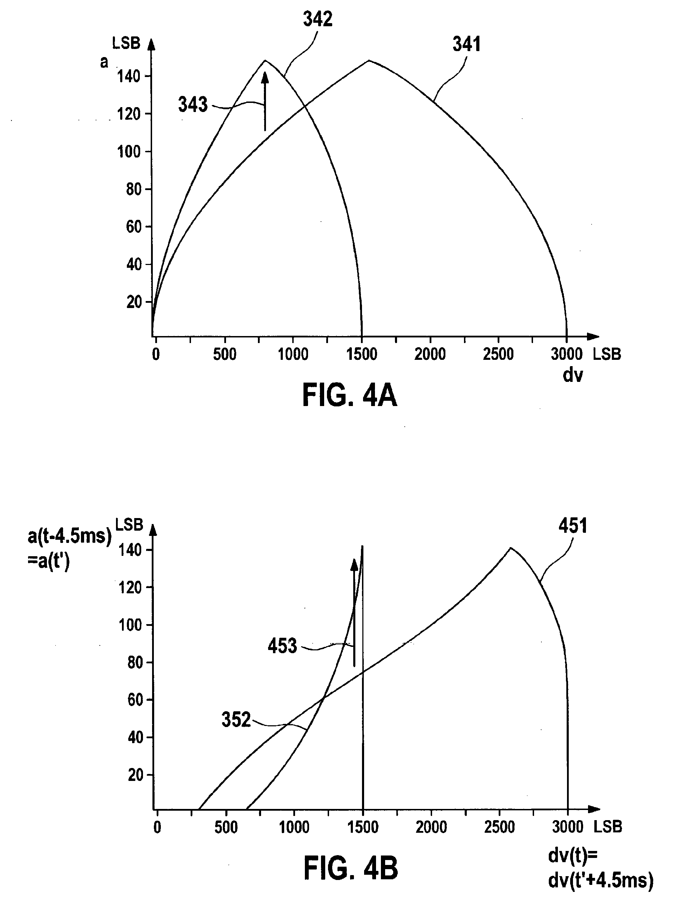

Erfindungsgemäß kann hier Abhilfe geschaffen werden, indem die Beschleunigung um wenige Millisekunden verzögert, die Geschwindigkeitsänderung dv aber auf der unverzögerten Beschleunigung a berechnet wird. Damit wird der Wert a(t-x) mit dem Integral dv(t) verknüpft, oder mit der Substitution t'=t-x, der Wert a(t') mit dv(t'+x). Ein Beschleunigungswert a(t') wird daher mit einem in der Zukunft liegenden Integralwert dv(t'+x) korreliert. Diese Desynchronisation hat zwei Vorteile. Zum einen fallen Peaks von der Beschleunigung a nicht mehr in Phasen, in denen die Geschwindigkeitsänderung dv stark ansteigt, sondern in Phasen, in denen die Geschwindigkeitsänderung dv weniger wächst. Das führt zu schmaleren, besser trennbaren Peaks im Merkmalsraum. Zum anderen fallen die langsameren Kollisionen, mit im Zeitbereich breiteren Peaks, nach Überschreiten des maximalen Beschleunigungswerts langsamer ab, d.h. sie bauen in dieser fallenden Flanke mehr Integral auf als die schnelleren Kollisionen mit schmalen Peaks. Durch das Korrelieren von a(t') mit dv(t'+x) ergibt sich damit bei langsamen Kollisionen eine stärkere Verschiebung des Peaks entlang der dv-Achse als bei den schnellen Kollisionen und damit eine verbesserte Trennbarkeit, wie es in den Figuren 4a und 4b dargestellt ist.

Fig. 4a zeigt die in Fig. 3b gezeigte synchrone Darstellung a-dv mit den Kennlinien 341, 342 sowie dem Faktor 343.

Fig. 4b zeigt demgegenüber desynchronisierte Kennlinien 451, 452 mit einem um 4,5ms verzögerten Beschleunigungssignal (a-Signal). Auf der Ordinate ist die Beschleunigung a(t-4,5ms) aufgetragen, die einer Beschleunigung a(t') entspricht. Dabei stellte t' eine Zeitskala dar, die in Bezug auf die Zeitskale t um eine Zeitdauer von 4,5ms verschoben ist. Auf der Abszisse ist die Geschwindigkeitsänderung dv(t) aufgetragen, die einer Geschwindigkeitsänderung dv(t'+4,5ms) entspricht. Zu dem Zeitpunkt, in dem die schnellere Kollision 452 ihr Peakmaximum, also den größten verschobenen Beschleunigungswert, erreicht, ist eine Trennbarkeit 453 um einen Faktor gegebenen, der größer ist als der entsprechenden Faktor der Trennbarkeit 343, in der in Fig. 4a gezeigten synchronen Darstellung.

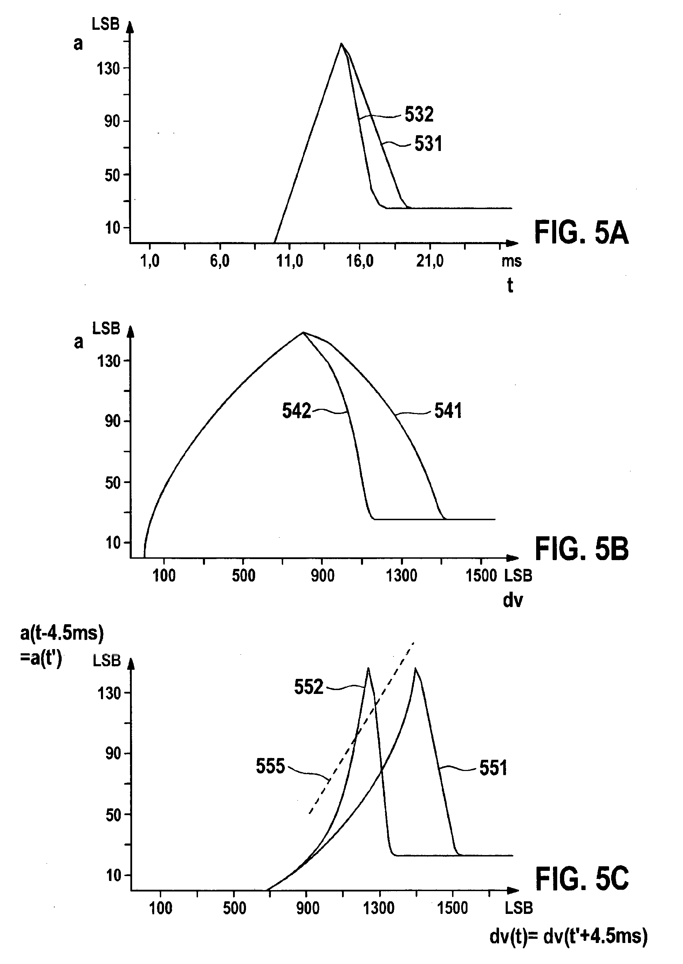

Die Figuren 5a-c zeigen weitere Darstellungen, bei denen sich zwei Peaks mit gleicher steigender Flanke nur in der fallenden Flanke unterscheiden.

Fig. 5a zeigt eine a-t-Darstellung einer ersten Kollision 531 und einer zweiten Kollision 532. Die Beschleunigungskennlinie der Kollision 531 fällt, ausgehend von einem gemeinsamen Maximum, langsamer ab als die Beschleunigungskennlinie der Kollision 532. In dieser Darstellung ist keine Trennung der Kollisionen 531, 532 möglich.

Fig. 5b zeigt eine a-dv-Darstellung der ersten Kollision 541 und der zweiten Kollision 542. Die Korrelationskennlinie der Kollision 541 fällt, ausgehend von einem gemeinsamen Maximum, langsamer ab als die Korrelationskennlinie der Kollision 542. In dieser synchronen Darstellung ist wiederum keine Trennung der Kollisionen 541, 542 möglich.

Fig. 5c zeigt eine Darstellung desynchronisierter Kennlinien 551, 552 mit um 4.5 ms verzögertem Beschleunigungssignal, entsprechend zu Fig. 4b. In dieser desynchronisierten Darstellung wird, gegenüber den in den Figuren 5a und 5b synchronen Darstellungen, eine Trennbarkeit mit einer steigenden Kennlinie 555 überhaupt erst möglich. Die mögliche Kennlinie 555 stellt somit eine Trennungskennlinie dar. In dieser Darstellung unterscheidet sich auch die Steilheit der steigenden Flanke, so dass die Peaks nicht mehr zusammenfallen.

Durch das Verzögern der Beschleunigung a wird der größere Integratoraufbau des breiteren Peaks 551 in der fallenden Flanke mitberücksichtigt, so dass damit eine Trennung überhaupt erst möglich wird. Auf diese Weise können Kollisionen, die in der synchronen Darstellung Peaks mit gleicher steigenden Flanke und unterschiedlicher fallender Flanke aufweisen, mittels einer steigenden Trennungskennline voneinander unterschieden werden.

Generell werden durch diese Desynchronisation Kollisionen mit schmalen Peaks gegenüber Kollisionen mit breiten Peaks begünstigt.

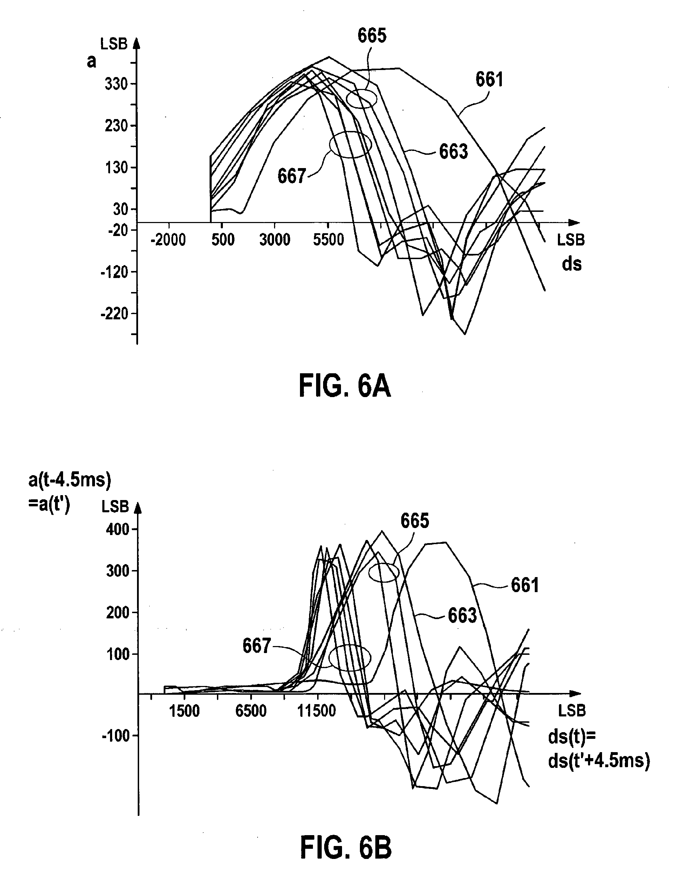

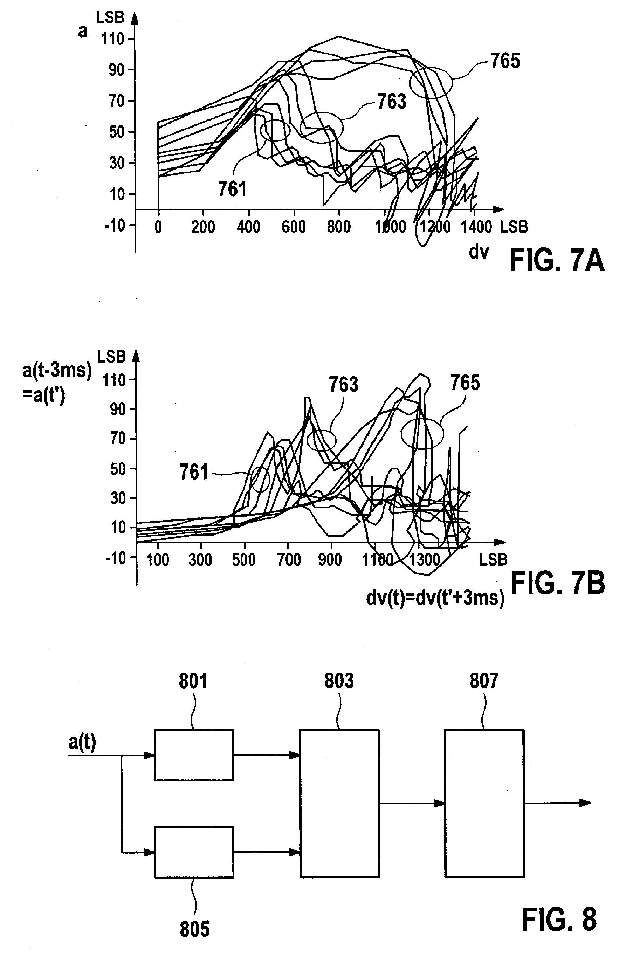

In den Figuren 6 und 7 werden zwei konkrete Beispiele anhand realer Kollisionsdaten beschrieben.

Die Figuren 6a und 6b sind auf eine Trennbarkeit von 0°-Kollisionen, d.h. von Kollisionen ohne Winkelversatz, gerichtet. Gezeigt sind Darstellungen von 0°-Versuchen mit unterschiedlicher Geschwindigkeit in der synchronen a-ds und in der um 4.5 ms desynchronisierten Darstellung. Die Kennlinie 661 bezieht sich dabei auf eine Kollision mit einer Geschwindigkeit von 26 km/h, die Kennlinie 663 auf eine Kollision mit einer Geschwindigkeit von 32 km/h, die Kennlinien 665 auf Kollisionen mit einer Geschwindigkeit von 40 km/h und die Kennlinien 667 auf Kollisionen mit einer Geschwindigkeit von 56 km/h, jeweils mit einer bestimmten Fahrzeugplattform. Die Peaks 661, 663, 665, 667 unterscheiden sich kaum in ihrer Höhe, aber geringfügig in ihrer Breite.

In diesem Ausführungsbeispiel wurde als Merkmalsraum die Beschleunigung a gegenüber dem zweiten Integral ds gewählt. Die in der a-ds Darstellung in Fig. 6a schwach angedeutete Trennbarkeit wird durch Verzögern der Beschleunigung um 4.5 ms deutlich verbessert, wie es in Fig. 6b gezeigt ist. So zeigt sich in Fig. 6b eine deutliche Separierung der 56 km/h Versuche 661 vom Bereich 32-40 km/h der durch die Kennlinien 663, 665 dargestellt ist, die wiederum vom 26 km/h Versuch 667 getrennt sind.

Das Verzögern der Beschleunigung geht natürlich zu Lasten der erreichbaren Auslösezeiten. Dies ist bei den hier dargestellten schnellen 0°-Kollisionen für Gurtstraffer und 1. Airbagstufe kaum möglich. Für die 2. Airbagstufe, die typischerweise nicht früher als 5ms nach der 1. Stufe gezündet werden kann, ergeben sich hierdurch aber keine Nachteile. Im Gegenteil, es bietet sich hier die Möglichkeit, verschiedene Kollisionsschweren und damit Verzögerungszeiten (Delayzeiten) für die 2. Airbagstufe, wesentlich leichter umzusetzen. Beispielsweise können die 56km/h Versuche 661, z.B. bei einer Forderung von 5ms Verzögerungszeit, von den 32-40 km/h Versuchen 663, 665, z.B. mit einer Forderung von 15ms Verzögerungszeit von den 26 km/h Versuchen 661, z.B. mit einer Forderung von 100ms Verzögerungszeit getrennt werden.

Insbesondere die Trennung des 26km/h Versuches 661 (lange Verzögerungszeit) von den schnelleren Versuchen 663, 665, 667 (kurze Delayzeiten) ist für die FMVSS 208 von grundlegender Wichtigkeit.

Die Figuren 7a und 7b sind auf eine Trennbarkeit von ODB-Kollisionen mit 40% Offset und Nichtauslösekollisionen (Nofire) gerichtet. Die ODB-Kollisionen mit 40% Offset gegen eine deformierbare Barriere zeigen nach einem initialen Beschleunigungspeak häufig einen Einbruch, der auf das Nachgeben der Barriere zurückzuführen ist. Im Gegensatz dazu zeigen Nichtauslösekollisionen wie der AZT-Versicherungscrash insbesondere bei neueren Fahrzeugstrukturen einen kontinuierlichen Anstieg auf sehr hohe Beschleunigungswerte, wie sie von der ODB-Kollision bis zur geforderten Auslösezeit meist nicht erreicht werden.

Durch Verzögern der Beschleunigung lässt sich dieser Effekt aber ausnutzen. Während die ODB-Kollisionen nach Überschreiten ihres ersten Beschleunigungsmaximums einbrechen und in dieser Phase nur wenig dv aufbauen, d.h. dv(t) und dv(t'=t+x) unterscheiden sich wenig, baut der AZT-Versicherungscrash durch seinen hohen und breiten ersten Peak kontinuierlich viel dv auf, d.h. dv(t'=t+x) ist deutlich höher als dv(t). In der desynchronisierten Darstellung ergibt sich also eine deutliche Verschiebung der beiden Kollisionstypen zueinander entlang der dv-Achse. In den Figuren 7a und 7b ist dies beispielhaft für eine Fahrzeugplattform im Merkmalsraum a-dv dargestellt.

In Fig. 7a sind Darstellungen von ODB-Kollisionsversuchen mit 40 km/h und 64 km/h gegenüber dem AZT-Versicherungscrash in der synchronen a-dv Darstellung gezeigt. Die ODB-Kollisionsversuchen mit 40 km/h sind durch Kennlinien 761, die ODB-Kollisionsversuchen mit 64 km/h durch Kennlinien 763 und die AZT-Versicherungscrashs durch Kennlinien 765 dargestellt.

In Fig. 7b sind entsprechende Kennlinien 761 der ODB-Kollisionsversuche mit 40 km/h, Kennlinien 763 der ODB-Kollisionsversuche mit 64 km/h und Kennlinien 765 der AZT-Versicherungscrashs in einer um 3 ms desynchronisierten Darstellung gezeigt. Auf der Ordinate ist die Beschleunigung a(t-3ms) aufgetragen, die einer Beschleunigung a(t') entspricht. Dabei stellte t' eine Zeitskala dar, die in Bezug auf die Zeitskale t um eine Zeitdauer von 3ms verschoben ist. Auf der Abszisse ist die Geschwindigkeitsänderung dv(t) aufgetragen, die einer Geschwindigkeitsänderung dv(t'+3ms) entspricht. Die Peaks der einzelnen Kollisionsverläufe 761, 763, 765 können mittels geeigneter Trennungskennlinien, die zwischen den Peaks angeordnet sind, voneinander unterschieden werden. Auf diese Weise können die zugrundeliegenden Kollisionen klassifiziert werden. Somit wird durch die Desynchronisierung insbesondere eine Trennung der ODB-Kollisionsversuche 761, 763 gegen den AZT- Versicherungscrash 765 möglich.

Die sich ergebende zeitliche Verzögerung um 3 ms ist gemäß diesem Ausführungsbeispiel kein Problem, da die ODB-Kollisionen auch mit Berücksichtigung dieser Verzögerung nach 13-15 ms erkannt werden können. Dies liegt deutlich vor der geforderten Auslösezeit von 25 ms (64km/h ODB) bzw. 40 ms (40 km/h ODB).

Die anhand der vorangegangenen Figuren beschriebene Vorgehensweise kann durch eine Umsetzung in einem Algorithmus realisiert werden.

Dabei kann der desynchronisierte Merkmalsraum als Zusatzfunktion einen klassischen a-dv oder a-ds Kernalgorithmus durch die üblichen Zusatz-(AddOn)-Mechanismen beeinflussen.

Ferner kann der desynchronisierte Merkmalsraum selbst als Kernalgorithmus eingesetzt werden. Da die Verzögerung für schnelle 0°-Versuche wegen der strengen Zündzeitanforderungen oft nicht möglich ist, kann ein normaler a-dv bzw. a-ds Kernalgorithmus mit einem desynchronisierten Merkmalsraum ver-ODERT werden. Die schnellen 0°Versuche können über die normale unverzögerte a-dv Kennlinie auslösen, während ODB-Kollisionen von der desynchronisierten Kennlinie profitieren können. Alternativ kann in einem Algorithmus, der für verschiedene Kollisionstypen wie 0° oder ODB verschiedenen Kernschwellen einsetzt, im 0°-Pfad eine normale und im ODB-Pfad eine desynchronisierte Kennlinie eingesetzt werden. Für die 2. Airbagstufe sind für alle Kollisionstypen i.d.R desynchronisierte Kennlinien möglich, da hier der Zeitverlust akzeptabel ist.

Auch kann der desynchronisierte Merkmalsraum nicht nur auf korrelierte Merkmale wie a und dv oder ds angewendet werden, sondern auf beliebige Merkmale, die auch auf unterschiedlichen Sensorinformationen beruhen können.

In jüngster Zeit wurden lernbasierte Algorithmen entwickelt, die in einem 3-dimensionalen Merkmalsraum automatisiert Trennflächen generieren. Auch hier sind durch eine Desynchronisierung der verwendeten Merkmale zusätzliche Informationen über den Kollisionsverlauf zugänglich, die die Performance verbessern können.

Fig. 8 zeigt ein Blockdiagramm eines Steuergeräts, gemäß einem Ausführungsbeispiel der vorliegenden Erfindung. In dem Steuergerät kann das erfindungsgemäße Verfahren umgesetzt werden.

Das Steuergerät kann ausgebildet sein, um ein Beschleunigungssignal a(t) über eine Schnittstelle zu empfangen. Eine Einrichtung 801 kann ausgebildet sein, um aus dem Beschleunigungssignal a(t) durch Integration eine Geschwindigkeitsänderung dv(t) oder eine Wegänderung ds(t) zu bestimmen und entsprechende Kennlinien, Werte oder Signale an eine Korrelationseinrichtung 803 bereitzustellen. Eine Verzögerungseinrichtung 805 kann ausgebildet sein, um das Beschleunigungssignal a(t) zu verzögern und eine entsprechende Kennlinie bzw. entsprechende Werte oder Signale des verzögerten Beschleunigungssignals a(t') an die Korrelationseinrichtung 803 bereitzustellen. Die Korrelationseinrichtung 803 kann ausgebildet sein, um das verzögerte Beschleunigungssignals a(t') und die Geschwindigkeitsänderung dv(t) oder die Wegänderung ds(t) miteinander in Bezug zu setzen und eine entsprechende Korrelationskennlinie bzw. Korrelationswerte oder Korrelationssignale an eine Vergleichseinrichtung 807 bereitzustellen. Die Vergleichseinrichtung 807 kann ausgebildet sein, um die Korrelationskennline oder Peaks in der Korrelationskennlinie anhand einer oder mehrerer Trennungskennlinien zu bewerten und somit eine Klassifizierung eines Ereignisses ermöglichen, das das Beschleunigungssignal a(t) hervorgerufen hat. Zusätzlich kann die Korrelationseinrichtung 803 ausgebildet sein, um das Beschleunigungssignal a(t) zu empfangen und zusätzlich eine Korrelation zwischen dem Beschleunigungssignal a(t) und der Geschwindigkeitsänderung dv(t) oder der Wegänderung ds(t) zu bestimmen, die in der Vergleichseinrichtung 807 mittels einer weiteren Trennungskennlinie bewertet werden kann.

Die beschriebenen und in den Figuren gezeigten Ausführungsbeispiele sind nur beispielhaft gewählt.

## Patentansprüche

1. Verfahren zur Klassifizierung eines Kollisionsverlaufs eines Fahrzeugs, das die folgenden Schritte umfasst:
Bestimmen (102) einer ersten Merkmalskennlinie, die einen zeitlichen Verlauf eines ersten Merkmals über den Kollisionsverlauf repräsentiert und in der zeitlich aufeinanderfolgende Werte des ersten Merkmals über die Zeit aufgetragen sind;
Bestimmen (104) einer zweiten Merkmalskennlinie, die einen um eine vorbestimmte Zeitdauer verschobenen zeitlichen Verlauf eines zweiten Merkmals (531, 532) über den Kollisionsverlauf repräsentiert und in der zeitlich aufeinanderfolgende Werte des zweiten Merkmals über die Zeit aufgetragen sind, wobei das erste und das zweite Merkmal auf einem oder mehreren Sensorsignalen basieren;
Bestimmen (106) eines Korrelationsverlaufs (551, 552) aus der ersten und der zweiten Merkmalskennlinie, indem der zeitliche Verlauf des ersten Merkmals und der verschobene zeitliche Verlauf des zweiten Merkmals in Bezug zueinander gesetzt werden, indem der zeitliche Verlauf des ersten Merkmals und der verschobene zeitliche Verlauf des zweiten Merkmals in einem 2-dimensionalen Merkmalsraum gegeneinander aufgetragen werden; und
Vergleichen (108) des Korrelationsverlaufs mit einer Trennungskennlinie (555), die unterschiedliche Wertebereiche des 2-dimensionalen Merkmalsraums voneinander trennt, um die Kollision zu klassifizieren.

2. Verfahren gemäß Anspruch 1, bei dem die vorbestimmte Zeitdauer eine Mehrzahl von Millisekunden umfasst.

3. Verfahren gemäß einem der vorangegangenen Ansprüche, bei dem es sich bei dem ersten Merkmal und dem zweiten Merkmal um miteinander korrelierte Größen handelt.

4. Verfahren gemäß einem der vorangegangenen Ansprüche, bei dem der zeitliche Verlauf des ersten Merkmals durch Integration des zeitlichen Verlaufs des zweiten Merkmals (531, 532) bestimmt wird.

5. Verfahren gemäß einem der vorangegangenen Ansprüche, bei dem das erste oder das zweite Merkmal eine Beschleunigung des Fahrzeugs repräsentiert und bei dem das jeweils andere Merkmal eine erste oder zweite Integration der Beschleunigung repräsentiert.

6. Verfahren gemäß einem der vorangegangenen Ansprüche, bei dem die Trennungskennlinie (555) ausgebildet ist, um zwischen einer Auslösung eines Personenschutzmittels und einer Nichtauslösung des Personenschutzmittels zu unterscheiden.

7. Verfahren gemäß einem der vorangegangenen Ansprüche, mit einem Schritt des Bestimmens der Trennlinie (555), basierend auf einem lernbasierten Algorithmus.

8. Verfahren gemäß einem der vorangegangenen Ansprüche, mit einem Schritt des Bestimmens eines weiteren Korrelationsverlaufs, indem der zeitliche Verlauf des ersten Merkmals und ein zeitlich nicht verschobener Verlauf des zweiten Merkmals in Bezug zueinander gesetzt werden, und mit einem Schritt des Vergleichen des weiteren Korrelationsverlaufs mit einer weiteren Trennungskennlinie, um die Kollision zusätzlich zu klassifizieren.

9. Steuergerät zur Klassifizierung eines Kollisionsverlaufs eines Fahrzeugs, das die folgenden Merkmale aufweist:
eine Einrichtung zum Bestimmen (102) einer ersten Merkmalskennlinie, die einen zeitlichen Verlauf eines ersten Merkmals über den Kollisionsverlauf repräsentiert und in der zeitlich aufeinanderfolgende Werte des ersten Merkmals über die Zeit aufgetragen sind;
eine Einrichtung zum Bestimmen (104) einer zweiten Merkmalskennlinie, die einen um eine vorbestimmte Zeitdauer verschobenen zeitlichen Verlauf eines zweiten Merkmals (531, 532) über den Kollisionsverlauf repräsentiert und in der zeitlich aufeinanderfolgende Werte des zweiten Merkmals über die Zeit aufgetragen sind, wobei das erste und das zweite Merkmal auf einem oder mehreren Sensorsignalen basieren;
eine Einrichtung zum Bestimmen (106) eines Korrelationsverlaufs (551, 552) aus der ersten und der zweiten Merkmalskennlinie, indem der zeitliche Verlauf des ersten Merkmals und der verschobene zeitliche Verlauf des zweiten Merkmals in Bezug zueinander gesetzt werden, indem der zeitliche Verlauf des ersten Merkmals und der verschobene zeitliche Verlauf des zweiten Merkmals in einem 2-dimensionalen Merkmalsraum gegeneinander aufgetragen werden; und
einer Einrichtung zum Vergleichen (108) des Korrelationsverlaufs mit einer Trennungskennlinie (555), die unterschiedliche Wertebereiche des 2-dimensionalen Merkmalsraums voneinander trennt, um die Kollision zu klassifizieren.

10. Computerprogrammprodukt zur Klassifizierung eines Kollisionsverlaufs eines Fahrzeugs, wobei das Computerprogrammprodukt Programmcode umfasst, der auf einem maschinenlesbaren Träger gespeichert ist und zur Durchführung der Schritte (102, 104, 106, 108) des Verfahrens nach einem der Ansprüche 1 bis 8 verwendet wird, wenn das Computerprogrammprodukt auf einem Steuergerät ausgeführt wird.

## Claims

1. Method for classifying a collision profile of a vehicle, which comprises the following steps:
determining (102) a first feature characteristic curve which represents a time profile of a first feature plotted against the collision profile, and in which chronologically successive values of the first feature are plotted against the time;
determining (104) a second feature characteristic curve which represents a time profile, shifted by a predetermined time period, of a second feature (531, 532) plotted against the collision profile, and in which chronologically successive values of the second feature are plotted against the time, wherein the first and second features are based on one or more sensor signals;
determining (106) a correlation profile (551, 552) from the first and the second feature characteristic curves in that the time profile of the first feature and the shifted time profile of the second feature are correlated to one another, in that the time profile of the first feature and the shifted time profile of the second feature are plotted against one another in a 2-dimensional feature space; and
comparing (108) the correlation profile with a dividing characteristic curve (555) which divides different value ranges of the 2-dimensional feature space from one another, in order to classify the collision.

2. Method according to Claim 1, in which the predetermined time period comprises a multiplicity of milliseconds.

3. Method according to one of the preceding claims, in which the first feature and the second feature are variables which are correlated with one another.

4. Method according to one of the preceding claims, in which the time profile of the first feature is determined by integrating the time profile of the second feature (531, 532).

5. Method according to one of the preceding claims, in which the first or the second feature represents acceleration of the vehicle, and in which the respective other feature represents a first or second integration of the acceleration.

6. Method according to one of the preceding claims, in which the dividing characteristic curve (555) is designed to differentiate between triggering of a personal protection means and non-triggering of the personal protection means.

7. Method according to one of the preceding claims, having a step of determining the dividing line (555) on the basis of a learning-based algorithm.

8. Method according to one of the preceding claims, having a step of determining a further correlation profile in that the time profile of the first feature and a chronologically non-shifted profile of the second feature are related to one another, and having a step of comparing the further correlation profile with a further dividing characteristic curve in order to additionally classify the collision.

9. Control device for classifying a collision profile of a vehicle which has the following features:
a device for determining (102) a first feature characteristic curve which represents a time profile of a first feature plotted against the collision profile, and in which chronologically successive values of the first feature are plotted against the time;
a device for determining (104) a second feature characteristic curve which represents a time profile, shifted by a predetermined time period, of a second feature (531, 532) plotted against the collision profile, and in which chronologically successive values of the second profile are plotted against the time, wherein the first and second features are based on one or more sensor signals;
a device for determining (106) a correlation profile (551, 552) from the first and the second feature characteristic curve in that the time profile of the first feature and the shifted time profile of the second feature are related to one another, in that the time profile of the first feature and the shifted time profile of the second feature are plotted against one another in a 2-dimensional feature space; and
a device for comparing (108) the correlation profile with a dividing characteristic curve (555) which divides different value ranges of the 2-dimensional feature space from one another, in order to classify the collision.

10. Computer program product for classifying a collision profile of a vehicle, wherein the computer program product comprises program code which is stored on a machine-readable carrier and is used to carry out the steps (102, 104, 106, 108) of the method according to one of Claims 1 to 8 when the computer program product is run on a control device.

## Revendications

1. Procédé de classement du déroulement d'une collision d'un véhicule, le procédé comportant les étapes suivantes :
déterminer (102) une première ligne caractéristique qui représente l'évolution temporelle d'une première caractéristique pendant le déroulement de la collision et sur laquelle sont reportées en fonction du temps des valeurs successives de la première caractéristique,
déterminer (104) une deuxième ligne caractéristique qui représente l'évolution dans le temps, décalée d'une durée prédéterminée, d'une deuxième caractéristique (531, 532) pendant le déroulement de la collision et sur laquelle sont reportées en fonction du temps des valeurs successives de la deuxième caractéristique, la première et la deuxième caractéristique étant basées sur les signaux d'un ou de plusieurs détecteurs,
déterminer (106) une évolution de corrélation (551, 552) à partir de la première et de la deuxième ligne caractéristique en comparant l'une à l'autre l'évolution temporelle de la première caractéristique et l'évolution temporelle décalée de la deuxième caractéristique, en reportant l'une par rapport à l'autre l'évolution temporelle de la première caractéristique et l'évolution temporelle décalée de la deuxième caractéristique dans un espace bidimensionnel de caractéristiques et
comparer (108) l'évolution de la corrélation à une ligne caractéristique de séparation (555) qui sépare l'une de l'autre les différentes plages de valeurs de l'espace bidimensionnel de caractéristiques, pour classer la collision.

2. Procédé selon la revendication 1, dans lequel la durée prédéterminée comporte plusieurs millisecondes.

3. Procédé selon l'une des revendications précédentes, dans lequel la première caractéristique et la deuxième caractéristique sont des grandeurs corrélées l'une à l'autre.

4. Procédé selon l'une des revendications précédentes, dans lequel l'évolution temporelle de la première caractéristique est déterminée par intégration de l'évolution temporelle de la deuxième caractéristique (531, 532).

5. Procédé selon l'une des revendications précédentes, dans lequel la première ou la deuxième caractéristique représentent l'accélération du véhicule et dans lequel l'autre caractéristique représente l'intégrale première ou seconde de l'accélération.

6. Procédé selon l'une des revendications précédentes, dans lequel la ligne caractéristique de séparation (555) est formée pour distinguer un déclenchement d'un moyen de protection des personnes et un non-déclenchement du moyen de protection des personnes.

7. Procédé selon l'une des revendications précédentes, présentant l'étape qui consiste à déterminer la ligne caractéristique (555) sur base d'un algorithme à apprentissage.

8. Procédé selon l'une des revendications précédentes, présentant l'étape qui consiste à déterminer une autre évolution de corrélation dans laquelle l'évolution temporelle de la première caractéristique et une évolution non décalée dans le temps de la deuxième caractéristique sont comparées l'une à l'autre et comportant l'étape qui consiste à comparer l'autre évolution de corrélation avec une autre ligne caractéristique de séparation pour encore mieux classer la collision.

9. Appareil de commande servant à classer l'évolution d'une collision d'un véhicule, l'appareil de commande présentant les caractéristiques suivantes :
un dispositif de détermination (102) d'une première ligne caractéristique qui représente l'évolution temporelle d'une première caractéristique pendant le déroulement de la collision et sur laquelle sont reportées en fonction du temps des valeurs successives de la première caractéristique,
un dispositif (104) qui détermine une deuxième ligne caractéristique qui représente l'évolution dans le temps, décalée d'une durée prédéterminée, d'une deuxième caractéristique (531, 532) pendant le déroulement de la collision et sur laquelle sont reportées en fonction du temps des valeurs successives de la deuxième caractéristique, la première et la deuxième caractéristique étant basées sur les signaux d'un ou de plusieurs détecteurs,
un dispositif (106) qui détermine une évolution de corrélation (551, 552) à partir de la première et de la deuxième ligne caractéristique en comparant l'une à l'autre l'évolution temporelle de la première caractéristique et l'évolution temporelle décalée de la deuxième caractéristique, en reportant l'une par rapport à l'autre l'évolution temporelle de la première caractéristique et l'évolution temporelle décalée de la deuxième caractéristique dans un espace bidimensionnel de caractéristiques et
un dispositif (108) qui compare l'évolution de la corrélation à une ligne caractéristique de séparation (555) qui sépare l'une de l'autre les différentes plages de valeurs de l'espace bidimensionnel de caractéristiques, pour classer la collision.

10. Produit de programme informatique destiné à classer l'évolution d'une collision d'un véhicule, le produit de programme informatique comportant un code de programme conservé en mémoire sur un support lisible par machine et étant utilisé pour mettre en oeuvre les étapes (102, 104, 106, 108) du procédé selon l'une des revendications 1 à 8 lorsque le produit de programme informatique est exécuté sur un appareil de commande.
